# EUROPÄISCHE PATENTSCHRIFT

(11) **EP 2 178 615 B1**
(45) Veröffentlichungstag und Bekanntmachung des Hinweises auf die Patenterteilung: **09.02.2011**
(21) Anmeldenummer: 08784655.6
(22) Anmeldetag: 09.07.2008
(51) Int. Cl.: B01D 25/21, B01D 25/30

(54) **FILTERPLATTE**
FILTER PANEL
PLATEAU FILTRANT

(30) Priorität: 20.07.2007 DE 202007010141 U; 30.01.2008 DE 202008001380 U
(43) Veröffentlichungstag der Anmeldung: 28.04.2010
(73) Patentinhaber: JVK Filtration Systems GmbH, 91166 Georgensgmünd (DE)
(72) Erfinder: HERMANN, Manfred, P., 90491 Nürnberg (DE)
(74) Vertreter: Tergau & Pohl Patentanwälte
(86) Internationale Anmeldenummer: PCT/EP2008/005567
(87) Internationale Veröffentlichungsnummer: WO 2009/012884

(56) Entgegenhaltungen:
- WO-A-01/37964
- WO-A-03/095063
- WO-A-2005/046837
- BE-A3- 1 010 181
- DE-A1- 1 960 821
- DE-A1- 19 700 901
- DE-A1- 19 902 925
- US-A- 4 911 839

## Beschreibung

Die Erfindung bezieht sich auf eine Filterplatte für eine Filterpresse. Derartige Filterpressen sind beispielsweise aus US 4,911,839 A, aus BE 1 010 181 A3 oder aus DE 19 60 821 A1 bekannt. Sie beinhalten ein aus mehreren Filterplatten bestehendes Filterplattenpaket. Das Filterplattenpaket besteht seinerseits aus mehreren paarweise nebeneinander angeordneten Filterplatten, welche teilweise aneinander liegen und zwischen sich eine Filterkammer bilden. Die Fitterplatten weisen hierfür eine zentrale Filterfläche und einen die zentrale Filtertläche umrahmenden, im Querschnitt verdickten Dichtrand auf. Die Filterplatten liegen mit ihren gegenüber der Filterfläche verdickten Dichträndern aneinander, so dass zwischen den Filterflächen von einander benachbarte Filterplatten ein Zwischenraum freigelassen ist. Dieser Zwischenraum zwischen zwei benachbarten Filterplatten wird als Filterkammer genutzt. Die Filterplatten können in der Filterpresse voneinander weg und aufeinander zu verfahren werden. Diese Verfahrbarkeit dient zum Öffnen bzw. zum Schließen der Filterkammern.

Zum Einfüllen der zu fikernden Suspension, welche üblicherweise als Trübe bezeichnet wird, ist ein Trübeeinlauf zumindest an jeder zweiten oder auch an jeder Filterplatte vorgesehen. Dieser Trübeeinlauf kann entweder im Bereich der Filterfläche der Filterplatte oder im Bereich des Dichtrands oder auch außerhalb des Dichtrands angeordnet sein. Um die Trübe sicher in die Filterkammer einzuleiten ist der Trübeeinlauf mit Einfüllhilfen, welche als Einführtüllen, Einfüllschlitze oder Einfüllkanäle ausgestaltet sein können, versehen. Die vorliegende Erfindung umfasst sämtliche gängigen Arten von Einfüllhilfen. Nachfolgend sind diese als Einlaufkanal bezeichnet. Derartige Einlaufkanäle werden zweckmäßigerweise an sogenannte Verteilerringe gekoppelt. Die Verteilerringe werden ihrerseits am Trübeeinlauf adaptiert, so dass die Trübe über den Verteilerring in die Einlaufkanäle gelangt und die Trübe ihrerseits über die Einlaufkanäle in die Filterkammer geleitet wird.

Zur Bildung einer möglichst großen Filterkammer, die ihrerseits geeignet ist, ein möglichst großes Volumen zu filtern, werden möglichst große Filterflächen verwendet. Da die Filterflächen beim Filtervorgang sehr hohen Pressdrücken ausgesetzt sind, besteht die Tendenz der Verformung der Filterflächen der einzelnen Filterplatten. Um diese Verformung zu begrenzen bzw. zu steuern, ist es bekannt, auf der Filterfläche einen oder mehrere Stützringe vorzusehen. Insbesondere im Bereich der Trübeeinläufe bzw. des Filterkammerzulaufs stimmt man das Verformungsverhalten der einander benachbarten Filterplatten dadurch aufeinander ab, dass bei geschlossener Filterkammer sich der Stützring der einen Filterplatte am Verteilerring der benachbarten Filterplatte abstützt.

Weiterhin ist es bekannt, zur Bildung sogenannter Membranfilterpressen zwei einander benachbarte Filterplatten als Plattenpaar so auszugestalten, dass eine Filterplatte zusätzlich mit einer Membran versehen ist zur Bildung einer Membranfilterplatte, während die zweite Platte ohne Membran eine Kammerfilterplatte bildet. Dies ist beispielsweise aus der DE-U-203 17 546 bekannt.

Nach einer gewissen Betriebszeit bzw. Filtrierzeit hat sich in der Filterkammer ein Filterkuchen gebildet, der aus der Filterkammer entfernt werden muss. Dies geschieht über ein Öffnen der Schließvorrichtung der Filterpresse und ein Auseinanderschieben der einzelnen Filterplatten. Der Filterkuchen wird entnommen und entweder weiter verarbeitet oder einer Deponie zugeführt.

Beim Membranpressfilter werden vor einem Öffnen der Schließvorrichtung die elastischen Membranen der Membranplatten mit Druckluft beaufschlagt. Hierdurch werden die Membranen mit dem über sie gespannten Filtertuch gegen den Filterkuchen gepresst. Durch den Pressvorgang wird dem Filterkuchen seine Feuchtigkeit weitgehend entzogen. Der Filterkuchen lässt sich dadurch zum einen leicht abreinigen. Weiterhin ist er einfach weiter verarbeitbar.

Beim Pressvorgang kann es nun insbesondere bei einem besonders flüssigkeitshaltigen und daher weichen oder bei einem nicht voll ausgebildeten Filterkuchen geschehen, dass der Filterkuchen beim Pressvorgang der Membran nur einen geringen Widerstand entgegensetzt. Hierdurch drückt die Membrane das Filtertuch im Bereich der Einlaufkanäle des Verteilerrings in diese Einlaufkanäle. Infolge dessen können die Membran und das Filtertuch reißen. Dieses Reißen des Filtertuchs und/oder der Membran führen zu einer Verschlechterung des Filterergebnisses und im schlimmsten Fall zu einem längeren Ausfall des Filters, da Reparaturmaßnahmen ergriffen werden müssen.

Der Erfindung liegt die Aufgabe zugrunde, ein Reißen des Filtertuches oder der Membran zu verhindern.

Diese Aufgabe wird erfindungsgemäß durch ein Filterplattenpaket mit den Merkmalen des Anspruchs 1 gelöst.

Hierzu ist am Stützring eine Schutzlippe schwenkbar gelagert, die in ihrer Schließstellung am Verteilerring anliegt und die Einlaufkanäle ganz oder nach Art eines Ventils teilweise abdeckt. Die Schutzlippe ist so zwischen dem Filtertuch und/oder der Membran einerseits und den Einlaufkanälen andererseits angeordnet. Beim Pressvorgang wird somit die Membran mit dem Filtertuch nicht mehr gegen die Einlaufkanäle, sondern gegen die Schutzlippe gedrückt. Die Schutzlippe lässt sich hierbei so ausführen, dass sie eine im Wesentlichen an die Kontur des Verteilerrings angepasste plane Fläche bildet, so dass ein versehentliches Reißen des Filtertuchs sicher vermieden ist. Aufwändige Reparaturmaßnahmen, die zu einem Betriebszustand der Filterpresse führen, treten nicht mehr auf.

Da eine derartige Filterpresse üblicherweise mit einem Überdruck von 5 bar und mehr betrieben wird, schwenkt die Schutzlippe bei einer Beaufschlagung mit der zu filtrierenden Flüssigkeit sicher zur Seite und gibt die Einlaufkanäle in die Filterkammer frei. Der Verteilerring kann somit hinsichtlich der Anordnung der Einlaufkanäle im Wesentlichen unverändert bleiben, so dass an der Auslegung der Filterpresse hinsichtlich der Strömungs- und Druckverhältnisse nichts zu ändern ist.

Eine derartige Schutzlippe lässt sich beispielsweise realisieren, indem derjenige Flanschabschnitt des Stützrings, der gegenüber dem Flanschabschnitt des Verteilerrings mit den Einlaufkanälen liegt, an seinem Ende mit einer insbesondere streifenartig ausgebildeten Schutzlippe versehen ist. Diese Schutzlippe ist mit dem Flansch des Stützringes verbunden. Dies wird beispielsweise mittels einer Materialverjüngung erreicht, so dass sich der Stützring mit der Schutzlippe als integrales Bauteil fertigen lässt. Als Material für den Stützring eignet sich beispielsweise Metall oder Kunststoff, wie ein Elastomer, so dass die scharnierartig mit dem Flansch des Stützrings verbundene Schutzlippe eine hinreichende Elastizität aufweist.

In einer anderen Variante ist das Scharnier nach Art eines Filmscharniers als eigenständiges, den Stützring und die Schutzlippe verbindendes Bauteil ausgeführt. Dazu ist das Scharnier insbesondere mit dem Stützring und der Schutzlippe verklebt, verschweißt oder verschraubt. Auch hier kann das Scharnier aus einem biegbaren Elastomer gefertigt sein.

Bei beiden Varianten ist daher gewährleistet, dass sich die Schutzlippe beim Pressvorgang auf die Einlaufkanäle zu schwenken lässt. Weiterhin ist gewährleistet, dass die Schutzlippe auch eine Mehrzahl dieser Schwenkvorgänge ohne eine mechanische Beschädigung vollführen kann.

Zweckmäßig ist die Schutzlippe derart ausgeführt, dass sie die zur Filterkammer gewandten Enden der Einlaufkanäle abdeckt. Da gerade die Enden der Einlaufkanäle am weitesten in die Filterkammer hineinragen, ist dort die Gefahr einer Entstehung eines Risses des Filtertuchs besonders hoch. Sind die Einlaufkanäle vollständig abgedeckt, so ist eine Beschädigung des Filtertuchs an den Einlaufkanälen ausgeschlossen.

In einer zweckmäßigen Weiterbildung ist am Verteilerring eine Schräge als Anlagefläche für die Schutzlippe vorgesehen. Die Schräge lässt sich hierbei so auslegen, dass die Schutzlippe während des Pressvorgangs im Wesentlichen formschlüssig am Ende des Verteilerrings anliegt und die Einlaufkanäle dabei vollständig abdeckt. Weiterhin ist durch die Schräge gewährleistet, dass die Schutzlippe nicht etwa überbogen wird. Die Gefahr einer mechanischen Beschädigung des Scharniers durch Überbiegen besteht somit nicht.

In einer ersten bevorzugten Ausführungsform der Erfindung sind der Verteilerring und der Stützring einstückig miteinander verbunden. Verteilerring und Stützring bilden so ein integrales Bauteil. Dieses integrale Bauteil eignet sich insbesondere zur Nachrüstung an vorhandenen Filterplatten. Das integrale Bauteil erfüllt somit eine Doppelfunktion. Zum Einen wird die Trübe bzw. die Suspension über die Einlaufkanäle des Verteilerrings zuverlässig in die Filterkammer eingebracht. Zum Anderen deckt die Schutzlippe die Einlaufkanäle beim Pressvorgang zuverlässig ab. Mit Hilfe der integralen Bauweise können die Schutzlippe und die Einlaufkanäle funktionsmäßig besonders gut aufeinander abgestimmt werden.

In weiterer Ausgestaltung sind die Einlaufkanäle zwischen Stützring und Verteilerring so angeordnet, dass sie weitgehend geschlossen sind. Auf diese Weise lassen sich die Einlaufkanäle strömungstechnisch günstig gestalten.

Bei einer Membranfilterpresse ist es vorteilhaft, das integrale Bauteil am Trübeeinlauf der Kammerfilterplatte zu fixieren.

In einer bevorzugten zweiten Ausführungsform sind der Verteilerring einerseits und der Stützring andererseits zwei verschiedenen Filterplatten zugeordnet. Es sind dies diejenigen Filterplatten, die schließlich das Plattenpaar mit einer gemeinsamen Filterkammer zwischen sich bilden.

Vorteilhaft ist der Stützring der Membranfilterplatte und der Verteilerring der Kammerfilterplatte zugeordnet. Auf diese Weise lässt sich die Filterkammer vom Trübekanal aus mit im Wesentlichen senkrecht zum Trübekanalverlauf verlaufenden Einlaufkanälen befüllen. Eine aufwändige Geometrie der Einlaufkanäle ist nicht vorzusehen.

In Anpassung an den Filtrierungsprozess ist der Trübeeinlauf - wie bereits erwähnt - entweder im Bereich der Filterfläche oder im Dichtrand oder außerhalb des Dichtrandes und der Filterfläche angeordnet. Um alle drei Anordnungsformen abzudecken bestehen für die jeweilige Anordnungsart geeignete Ausführungsformen der Erfindung. Dies hat auch den Vorteil, dass die Erfindung für bereits vorhandene Filterplatte bzw. Filterpressen verwendet werden kann, bei welchen die jeweilige Anordnung des Trübeeinlaufs im Nachhinein nicht mehr verändert werden kann. Die Montage des einstückigen Bauteils oder der separaten Stütz- und Verteilerringe kann sowohl bei der Erstmontage als auch beim Nachrüsten mit einer Verschraubung, einem Klipsverschluß oder mit Hilfe eines flexiblen Griprings erfolgen.

Bei im Bereich der Filterfläche angeordneten Trübeeinläufen, insbesondere bei zentral in der Mitte der Filterfläche angeordneten Trübeeinläufen ist es zweckmäßig, die Einlaufkanäle sternförmig um den Trübeeinlauf zu gruppieren. Durch die sternförmige Anordnung ist eine gleichmäßige Verteilung der Trübe in alle Richtungen gewährleistet. Vorzugsweise wird ein Winkel von 30° zwischen den einzelnen Einlaufkanälen hierbei nicht unterschritten. Bei der sternförmigen Anordnung der Einlaufkanäle ist in vereinfachter Ausführung jedem Einlaufkanal eine separate Schutzlippe zugeordnet. Infolge der sternförmigen Anordnung der Einlaufkanäle sind die einzelnen Schutzlippen polygonal angeordnet. Dies bedeutet, dass die virtuelle, die Schutzlippen miteinander verbindende Linie ein Polygonzug ist.

Die in weiterer Ausgestaltung vorgesehene Anordnung des Trübeeinlaufs im Dichtrand bzw. außerhalb des Dichtrandes hängt im Wesentlichen von der Dicke des Dichtrandes ab. Weist der Dichtrand eine ausreichend große Eigenbreite zur Einbringung der Trübeeinläufe auf, bietet es sich an, die Trübeeinläufe in dem Dichtrand zu integrieren. Wird für die Trübeeinläufe indessen ein größere Einbauraum benötigt, wird hierfür der Raum außerhalb der Filterplatte verwendet. Bei dieser Ausführungsform stehen die Trübeeinläufe dann nach Art von Ohren aus dem Dichtrand hinaus. Bei beiden Bauformen können in fertigungstechnisch einfacher Ausgestaltung mehrere parallel zueinander verlaufende Einlaufkanäle verwendet werden. Dies begünstigt die Verwendung nur einer Schutzlippe zur Abdeckung sämtlicher Einlaufkanäle. In einer anderen Ausgestaltung, die eine besonders gute Verteilung der Trübe begünstigt, können die Einlaufkanäle winkelig zueinander angeordnet sein. Die Einlaufkanäle haben dann eine diffusorartige Wirkung bei der Einbringung der Trübe in die Filterkammer. Hierbei soll der Innenwinkel zwischen den einzelnen Einlaufkanälen 30° zweckmäßigerweise nicht überschreiten.

Fertigungstechnisch günstig ist die Ausführungsform der Erfindung, bei welcher Stützring und Schutzlippe aus demselben Werkstoff bestehen. In Abhängigkeit vom jeweiligen Einsatzzweck der Filterplatten bietet sich beispielsweise Kunststoff oder Metall, beispielsweise Edelstahl, als Werkstoff an.

Zweckmäßig, weil fertigungstechnisch einfach, ist die Lagerung der Schutzlippe am Stützring mit Hilfe eines Filmscharniers. Um die Schutzwirkung der Schutzlippe zu verbessern, ist in weiterer Ausgestaltung vorgesehen, die Schutzlippe selbst als biegesteifen Lippenstreifen auszugestalten, welcher mit dem schwenkbaren Scharnierteil verbunden wird. Diese zweiteilige differenziert Bauweise hat den Vorteil, dass das Scharnier weiterhin als Filmscharnier fertigungstechnisch einfach und günstig gefertigt werden kann. Das Filmscharnier umfasst hierfür eine Trägerschürze. Auf dieser Trägerschürze ist ein biegesteifer Lippenstreifen adaptiert. Dieser biegesteife Lippenstreifen ist zweckmäßigerweise an die Kontur des ihm zugeordneten Verteilerrings angepasst, was zu einer besonders guten Abdeckung des ihm jeweils zugeordneten Einlaufkanals führt. Neben der integralen Bauweise aus einem Werkstoff von Filmscharnier und Schutzlippe kann die Schutzlippe mit dem Filmscharnier verschweißt sein. Es ist auch möglich, den biegesteifen Lippenstreifen mit der Trägerschürze zu verschweißen oder zu verklipsen oder zu verschrauben. Es ist auch denkbar, die Schutzlippe mittels einer Klipsverbindung am Stützring schwenkbar zu lagern.

In weiterer Ausgestaltung der Erfindung ist es vorgesehen, die Schutzlippe bzw. den biegesteifen Lippenstreifen austauschbar auszugestalten. Auf diese Weise ist es möglich, eine abgenutzte Schutzlippe separat zu ersetzen, ohne den zugeordneten Stützring austauschen zu müssen.

Nachfolgend wird ein Ausführungsbeispiel der Erfindung anhand einer Zeichnung näher erläutert. Darin zeigen:
- Fig. 1: den Randbereich eines Filterplattenpaars mit außerhalb des Dichtrandes angeordneten Trübeeinlauf,
- Fig. 2: einen Verteilerring,
- Fig. 3: einen Stützring,
- Fig. 4: den Randbereich des Filterplattenpaares aus Fig. 1 im Montagezustand in einer Schnittdarstellung,
- Fig. 5: ein Detail aus Fig. 4,
- Fig. 6: eine geschnittene Darstellung des Randbereichs eines Filterplattenpaars mit außerhalb des Dichtrandes angeordnetem Trübeeinlauf und mit einem an der Membranfilterplatte angeordneten Stützring und einem an der Kammerfilterplatte angeordneten Verteilerring,
- Fig. 7: den Randbereich eines Filterplattenpaars mit außerhalb des Dichtrandes angeordnetem Trübeeinlauf mit einer einstückigen Ausgestaltung von Stützring und Verteilerring mit Anordnung an der Kammerfilterplatte,
- Fig. 8: eine perspektivische Gesamtdarstellung des aus Verteilerring und Stütz- ring bestehenden einstückigen Bauteils gemäß Fig. 7,
- Fig. 9: eine Vorderansicht des in Fig. 8 dargestellten Bauteils,
- Fig. 10: eine Seitenansicht des in Fig. 8 und Fig. 9 dargestellten Bauteils,
- Fig. 11: eine Darstellung des Details XI in Fig. 10,
- Fig. 12: die Detaildarstellung einer zweiteilig aufgebauten Schutzlippe mit Film- scharnier,
- Fig. 13: die perspektivische Ansicht einer Kammerfilterplatte mit zentralem Trü- beeinlauf,
- Fig. 14: die Bauteilkombination eines erfindungsmäßigen Stützrings und Verteiler- rings für ein Filterplattenpaar mit zentralem Trübeeinlauf gemäß Fig. 13 mit geöffneter Schutzlippe,
- Fig. 15: eine Seitenansicht des in Fig. 14 gezeigten Stützrings und Verteilerrings mit geöffneter Schutzlippe,
- Fig. 16: den Schnitt XVI-XVI in Fig. 15,
- Fig. 17: die Schnittdarstellung gemäß Fig. 16 jedoch mit geschlossener Schutzlip- pe und
- Fig. 18: einen perspektivischen Schnitt auf den in Fig. 17 dargestellten Verteiler- ring und Stützring mit geschlossener Schutzlippe.

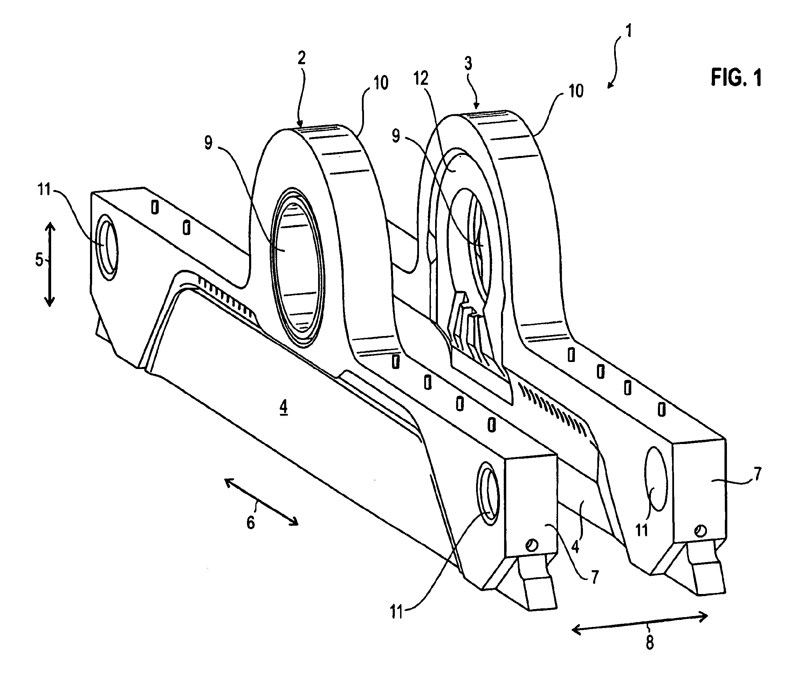

Gemäß Fig. 1 umfasst ein Filterplattenpaket 1 eine Membranfilterplatte 2 und eine Kammerfilterplatte 3 als Teil eines in den Figuren nicht dargestellten Membranpressfilters. Jede Filterplatte 2,3 weist einen inneren Plattenkörper mit einer Plattenoberfläche, der Filterfläche 4 auf beiden Seiten auf. Die Filterfläche 4 ist randseitig sowohl in vertikaler Richtung 5 als auch in Querrichtung 6 umgeben von einem gegenüber der Filterfläche 4 verdickten Plattenrand, dem Dichtrand 7. Mit anderen Worten läuft der Dichtrand 7 in vertikaler Richtung 5 und in Querrichtung 6 um die Filterfläche 4 herum. In der Fig. 1 ist lediglich der obere Teil der beiden Filterplatten 2,3 dargestellt. Der Dichtrand 7 und die Filterfläche 4 sind in vertikaler Richtung 5 nach unten fortgesetzt zu denken.

Der Dichtrand 7 springt gegenüber der Filterfläche 4 in der Plattenaufbaurichtung 8 beidseitig deutlich hervor. In der Querrichtung 6 mittig schließt sich in vertikaler Richtung 5 an den Dichtrand 7 ein Trübeeinlauf 9 an, dessen Einfassung 10 die gleiche Dicke wie der Dichtrand 7 aufweist. Die Einfassung 10 ist damit eine Verlängerung des Dichtrandes 7 in vertikaler Richtung 5. Fig. 1 zeigt somit eine Ausführungsform der Filterplatte 2,3 mit nach Art eines Ohres aus dem Dichtrand 7 abstehenden Trübeeinlauf 9, welcher außerhalb des Dichtrandes 7 und der Filterfläche 4 liegt. In Querrichtung 6 weist jede Filterplatte 2,3 an ihren beiden Enden eine Filtratbohrung 11 auf.

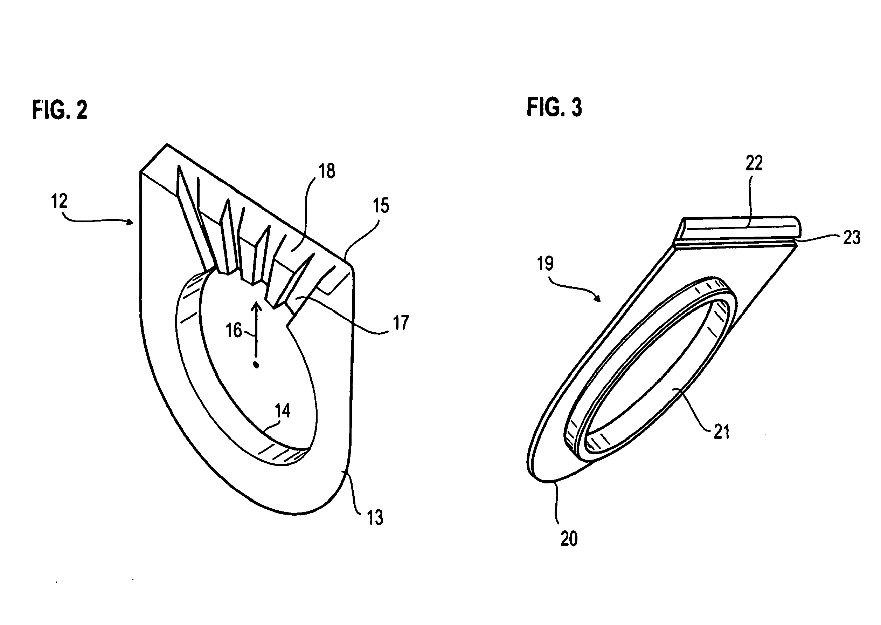

In die Kammerfilterplatte 3 ist ein Verteilerring 12 eingesetzt, der in Fig. 2 separat dargestellt ist. Gemäß Fig. 2 weist der Verteilerring 12 einen Flansch 13 und einen Rohrabschnitt 14 auf. Am Flansch 13 ist ein Flanschkragen 15 angeordnet, der in radialer Richtung 16 im Ausführungsbeispiel von insgesamt vier in einem Winkel kleiner 30° schräg zueinander verlaufenden Einlaufkanälen 17 durchbrochen ist. Der Flanschkragen 15 weist an seinem in radialer Richtung 16 nach außen orientierten Ende eine Schräge 18 auf.

Fig. 3 zeigt einen Stützring 19, der einen Flansch 20 und einen Rohrabschnitt 21 umfasst. Am Flansch 20 des Stützrings 19 ist eine streifenartig ausgebildete Schutzlippe 22 an einem als Materialverjüngung nach Art eines Filmscharniers ausgebildeten Scharnier 23 schwenkbar gelagert. Der Stützring 19 ist einstückig aus einem Elastomer gefertigt. Die Schutzlippe 22 ist daher um das Scharnier 23 ohne Mühe schwenkbar.

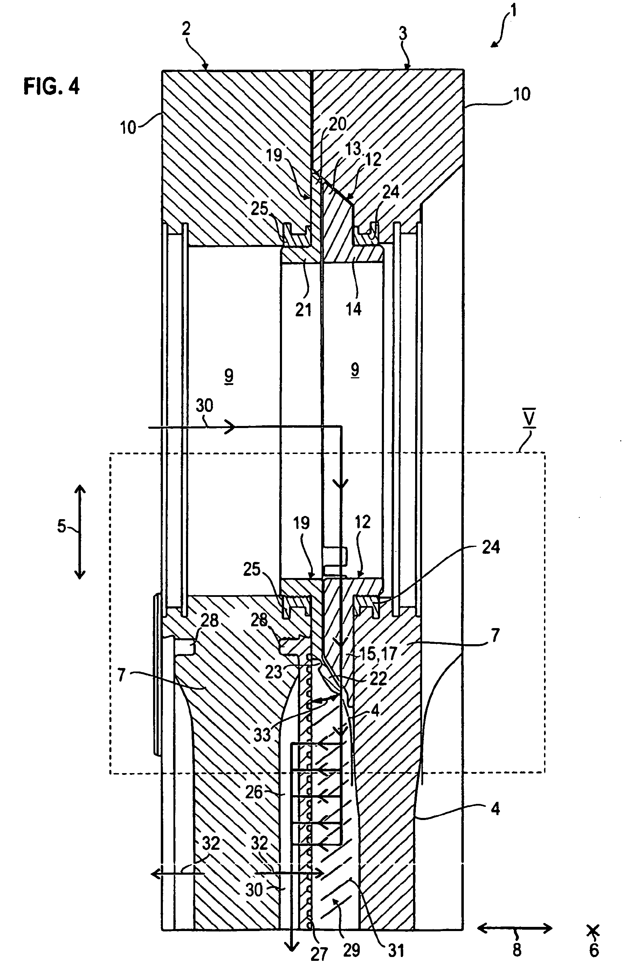

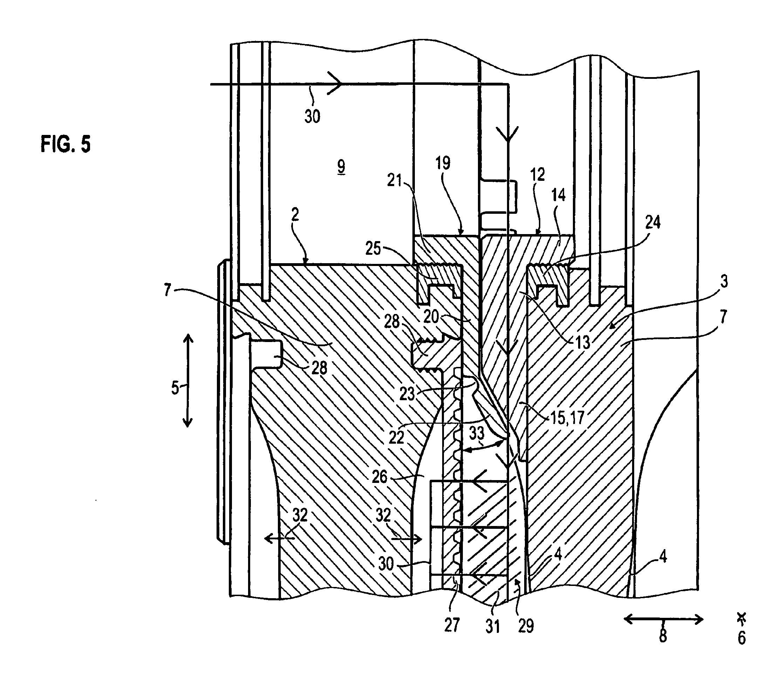

Fig. 4 zeigt die beiden Filterplatten 2,3 im Montagezustand. Dabei sind die Trübeeinläufe 9 der Filterplatten 2,3 in Plattenaufbaurichtung 8 mittig im Bereich der Einfassungen 10 geschnitten. Zur Montage werden die beiden Filterplatten 2,3 in Plattenaufbaurichtung 8 aneinander geschoben, bis ihre Dichtränder 7 und ihre Einfassungen 10 aneinander stoßen. In den Trübeeinlauf 9 der Kammerfilterplatte 3 ist der Verteilerring 12 mit seinem Rohrabschnitt 14 eingeschoben und mittels eines Verbindungselements 24 fixiert. Dabei ist der Flanschkragen 15 in vertikaler Richtung 5 nach unten orientiert. In den Trübeeinlauf der Membranfilterplatte 2 ist der Stützring 19 mit seinem Rohrabschnitt 21 eingeschoben und mit einem weiteren Verbindungselement 25 fixiert. Im Montagezustand liegen die beiden Flansche 13,20 von Verteilerring 12 und Stützring 19 aneinander an und stützen sich gegenseitig ab. Dies ist insbesondere der Fig. 5 als Ausschnittsvergrößerung der Fig. 4 zu entnehmen.

Auf der Filterfläche 4 der Membranfilterplatte 2 ist beidseitig eine Membranmatte 26 mit in den Figuren nicht dargestellten Noppen befestigt. Über diese Membranmatte 26 ist ein Filtertuch 27 gespannt, das sich an den nicht dargestellten Noppen der Membranmatte 26 abstützt. Das Filtertuch 27 ist im Bereich des Dichtrandes 7 mit Befestigungselementen 28 befestigt. Membranmatte 26 und Filtertuch 27 bilden somit ein sich über die gesamte Filterfläche 4 erstreckendes System von Sammelkanälen.

Das Prinzip für die Befestigung des Verteilerrings 12 und des Stützrings 19 mittels der Verbindungselemente 24,25 und die Befestigung des Filtertuchs 27 mittels der Befestigungselemente 28 ist in der DE-U-203 17 546 eingehend beschrieben.

Im Montagezustand liegen die Einfassungen 10 der Trübeeinläufe 9 von Membranfilterplatte 2 und Kammerfilterplatte 3 aneinander an. Die Trübeeinläufe 9 bilden gemeinsam einen Trübekanal. Weiterhin liegen die Dichtränder 7 von Membranfilterplatte 2 und Kammerfilterplatte 3 in vertikaler Richtung 5 und in Querrichtung 6 umlaufend aneinander an. Somit ist zwischen der Filterfläche 4 der Membranfilterplatte 2 mit ihrem Filtertuch 27 und zwischen der Filterfläche 4 der Kammerfilterplatte 3 eine Filterkammer 29 gebildet. Der Flansch 13 des Verteilerrings 12 ragt mit seinem Flanschkragen 15 in die Filterkammer 29 hinein. Auf diese Weise ist über die Einlaufkanäle 17 eine durchgängige Verbindung zwischen der Filterplatte 29 und dem Trübekanal hergestellt. Die Einlaufkanäle 17 werden hierbei bis auf ihre zur Filterkammer 29 hin orientierten Enden vom Flansch 20 des Stützringes 19 zur Bildung eines FilterkammerZulaufs 12,19 abgedeckt. Die vom Trübeeinlauf 9 vertikal in die Filterkammer 29 mündenden Einlaufkanäle 17 sind in den Figuren 4 und 5 vom Flanschkragen 15 verdeckt. Dies ist durch das jeweilige gemeinsame Bezugszeichen 15,17 angedeutet. Den Enden der Einlaufkanäle 17 gegenüber und zwischen dem Filtertuch 27 und den Einlaufkanälen 17 ist die Schutzlippe 22 angeordnet. Die in der Figur 1 gezeigten Filtratbohrungen 11 bilden in Plattenaufbaurichtung 8 bezogen auf das gesamte Filterplattenpaket 1 insgesamt vier in der Figur nicht zu sehende Filtratkanäle aus.

Im Filtrierbetrieb wird das Filterplattenpaket 1 mit einer zu filtrierenden Suspension beaufschlagt. Dabei nimmt die Suspension den Filtrierweg 30 durch das Filterplattenpaket 1. Die Suspension tritt über den Trübekanal mit einem Überdruck von etwa 5 bar in das Filterplattenpaket ein. Vom Trübekanal aus tritt die Suspension durch die Einlaufkanäle 17 in die Filterkammer 29 ein. Der flüssige Anteil der Suspension tritt durch das Filter tuch 27 hindurch und wird über die Sammelkanäle der Membranmatte 26 abgeführt. Die Sammelkanäle stehen über im Dichtrand 7 eingearbeitete und in den Figuren nicht dargestellte Filtratkanäle in Verbindung mit den Filtratbohrungen 11. Über die Filtratbohrungen 11 wird das Filtrat abgeführt. Mit zunehmender Betriebsdauer bzw. Filtrierzeit bildet sich in der Filterkammer 29 ein in den Fig. 4 und 5 schraffiert angedeuteter Filterkuchen 31.

Dieser Filterkuchen 31 muss von Zeit zu Zeit abgereinigt werden. Hierzu werden die Membranfilterplatten 2 mit Druckluft beaufschlagt. Hierdurch dehnen sich die Wandungen der Membranfilterplatte 2 in Ausdehnungsrichtung 32 beidseitig in der Plattenaufbaurichtung 8 aus. Die Membranmatten 26 üben nun mit ihren mit dem Filtertuch 27 bespannten Außenseiten einen Druck in Ausdehnungsrichtung 32 auf den Filterkuchen 31 aus. Dem Filterkuchen 31 wird hierbei ein großer Teil seiner Restfeuchte entzogen. Im Bereich der Einlaufkanäle 17 wird die Schutzlippe 22 von ihrer den Einlaufkanälen 17 abgewandten Seite her vom Filtertuch 27 in Schwenkrichtung 33 gegen die Schräge 18 des Flanschkragens 15 gepresst. Auf diese Weise ist ein Verfangen des Filtertuches 27 in den Einlaufkanälen 17 und eine mögliche Beschädigung des Filtertuches 27, insbesondere durch ein Einreißen, wirkungsvoll vermieden.

Nach dem Auspressen der Filterkuchen 31 werden die einzelnen Filterplatten 2,3 in Plattenaufbaurichtung 8 auseinander gezogen. Die Filterkuchen 31 werden entfernt und beispielsweise weiter verarbeitet oder einer Deponie zugeführt. Nach einem neuerlichen Zusammenschieben der Filterplatten 2,3 beginnt der Filterzyklus von neuem.

Da die Filterung unter einem Überdruck mit etwa 5 bar ausgeführt wird, drückt die durch die Einlaufkanäle strömende Suspension die Schutzlippe 22 von der Schräge 18 des Flanschkragens 15 weg und gibt somit in jedem Fall die Einlaufkanäle 17 frei. Zu einer mechanischen Beschädigung des Scharniers 23, mit dem die Schutzlippe 22 am Flansch 20 verbunden ist, kommt es nicht. Dies liegt daran, dass die Schwenkrichtung 33 der Schutzlippe 22 in der einen Seite durch das Filtertuch 27 und in der anderen Seite durch die Schräge 18 beschränkt ist.

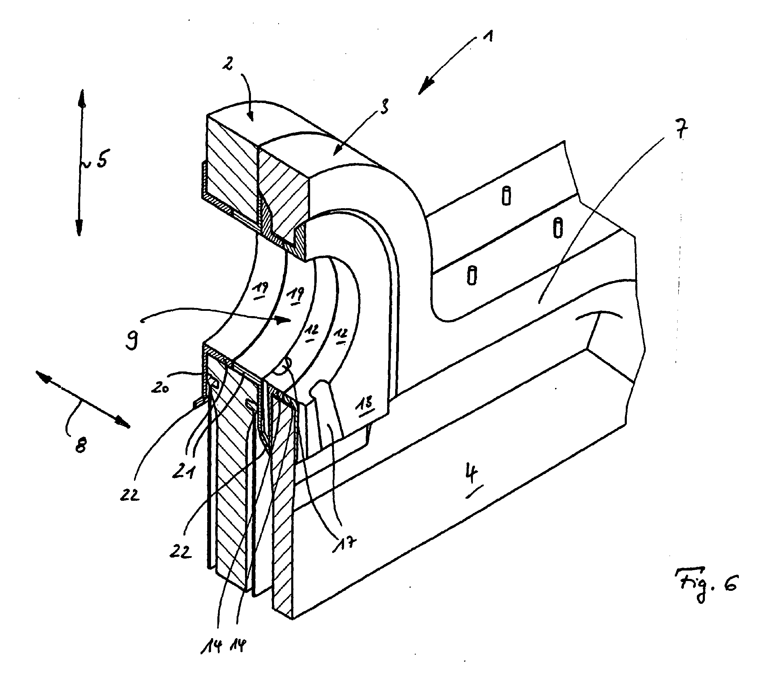

Das in Fig. 6 dargestellte Filterplattenpaket 1 besteht aus der Membranfilterplatte 2 und der Kammerfilterplatte 3. Die Membranfilterplatte 2 trägt im Bereich ihres Trübeeinlaufs 9 die beiden einander in Plattenaufbaurichtung 8 voneinander abgewandten Stützringe 19. Die Stützringe 19 stoßen mit ihren Rohrabschnitten 21 aneinander. Die im Wesentlichen rechtwinklig zu den Rohrabschnitten 21 verlaufenden Flanschen 20 lagern an ihren den Rohrabschnitten 21 in vertikaler Richtung 5 abgewandten Enden jeweils eine Schutzlippe 22.

Analog dazu sind im Trübeeinlauf 9 der Kammerfilterplatte 3 zwei in Plattenaufbaurichtung 8 voneinander abgewandte Verteilerringe 12 angeordnet. Die Verteilerringe 12 stoßen mit ihren Rohrabschnitten 14 in Plattenaufbaurichtung 8 aneinander. In die im Wesentlichen in vertikaler Richtung 5 verlaufenden Flanschen 13 der Verteilerringe 12 ist im Ausführungsbeispiel der Fig. 6 jeweils ein Einlaufkanal 17 eingeformt. Aus der Darstellung der Fig. 6 ist ersichtlich, dass die in der Zeichnung dargestellte rechte Schutzlippe 22 den zwischen der Membranfilterplatte 2 und der Kammerfilterplatte 3 eingeschlossenen Einlaufkanal 17 verschließt. Die am Stützring 19 gelagerte Schutzlippe 22 liegt hierfür am Flansch 13 des Verteilerrings 12 an.

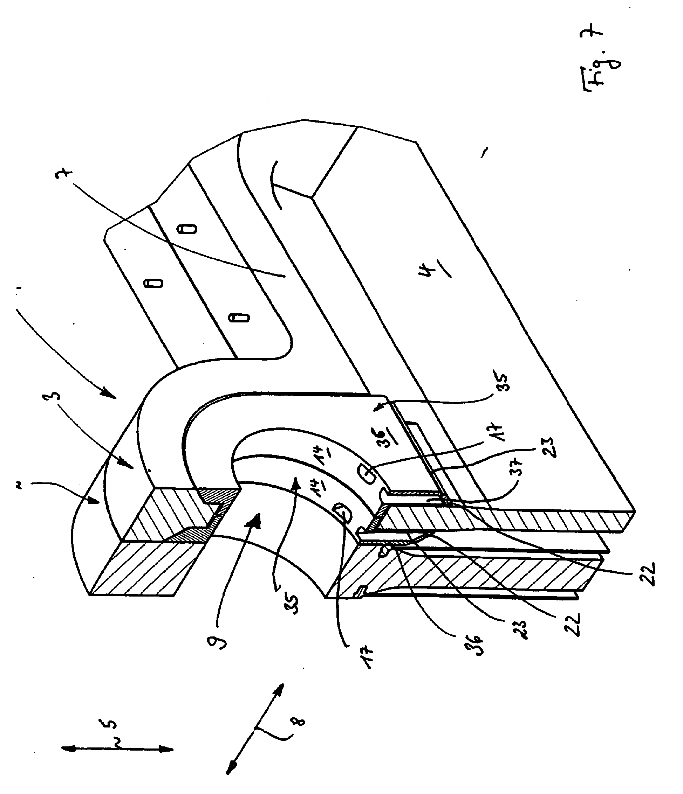

Bei der in Fig. 7 dargestellten einstückigen Ausführungsform bilden Verteilerring und Stützring das Bauteil 35. Fig. 7 zeigt zwei in Plattenaufbaurichtung 8 voneinander abgewandte Bauteile 35, die im Bereich des Trübeeinlaufs 9 angeordnet sind. Die Bauteile 35 weisen jeweils einen in der Darstellung der Fig. 7 in Plattenaufbaurichtung 8 verlaufenden Rohrabschnitt 14 auf. Der Rohrabschnitt 14 ist randseitig von einem Stützflansch 36 begrenzt. In Plattenaufbaurichtung 8 verläuft gleichebig zum Stützflansch 36 ein Verteilerflansch 37. Mit dem Verteilerflansch 37 liegt das Bauteil 35 am Rand des Trübeeinlaufs 9 bündig an. Mit dem Verteilerflansch 37 übergreift das Bauteil 35 den Dichtrand 7 teilweise. In den Verteilerflansch 37 ist im Ausführungsbeispiel der Fig. 7 jeweils ein Einlaufkanal 17 eingeformt.

An seinem dem Rohrabschnitt 14 in vertikaler Richtung 5 abgewandten Ende ist mittels eines Scharniers 23 am Stützflansch 36 eine Schutzlippe 22 angeformt. Die Schutzlippe 22 stößt mit ihrer dem Scharnier 23 abgewandten Endkante gegen den Verteilerflansch 37 und dichtet so wiederum das Ende des Einlaufkanals 17 gegenüber der Filterkammer 29 ab.

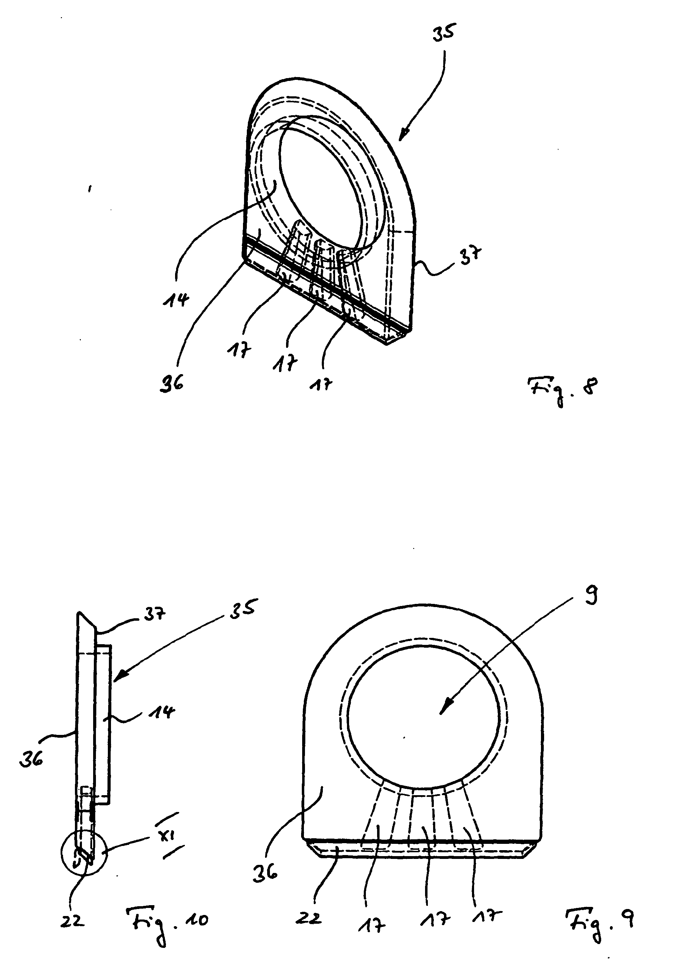

Aus der Darstellung der Fig. 7 ist darüber hinaus erkennbar, dass das Bauteil 35 sowohl die Verteilerfunktion eines Verteilerrings als auch die Stützfunktion eines Stützrings zugleich übernimmt. Das Bauteil 35 ist in Fig. 8 nochmals gezeigt. Dort sind drei schräg zueinander verlaufende Einlaufkanäle 17 gezeigt. Besonders vorteilhaft ist es, wenn der Schrägungswinkel zwischen den Einlaufkanälen 7 ein Maß von 30° nicht übersteigt. Die Einlaufkanäle 17 sind bei sämtlichen Ausführungsformen der Erfindung konisch öffnend vom Trübeeinlauf 9 zur Filterkammer 29 hin ausgestaltet. Die Einlaufkanäle 17 können sowohl einteilig als auch mehrteilig sein. Ebenso ist es möglich, die Einlaufkanäle 17 mit einem kreisrunden Querschnitt auszuführen.

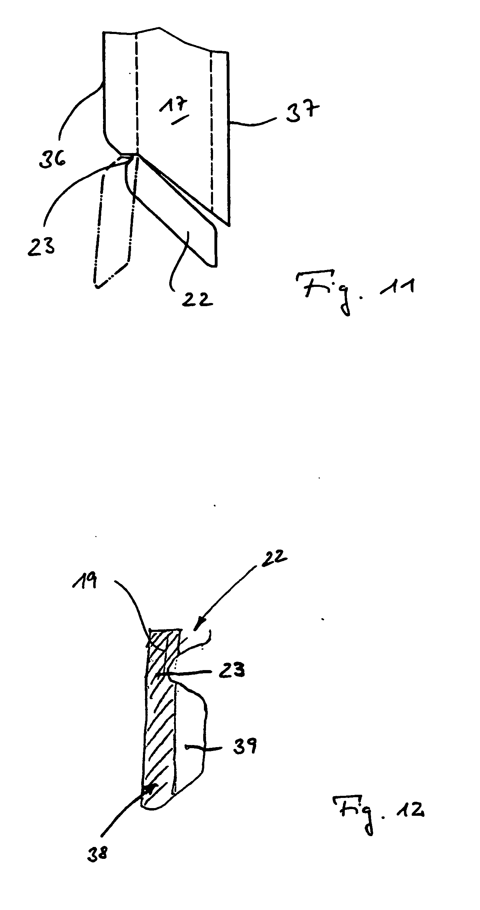

In Fig. 11 ist deutlich erkennbar ein zwischen dem Stützflansch 36 und dem Verteilerflansch 37 verlaufender Einlaufkanal 17. Des Weiteren gezeigt ist die mittels eines Scharniers 23 am unteren Ende des Stützflanschs 36 schwenkbar gelagerte Schutzlippe 22. Erkennbar in Fig. 12 ist das untere Ende des Stützrings 19 bzw. des Stützflanschs 36. An das untere Ende des Stützrings 19 schließt sich das als Filmscharnier ausgestaltete Scharnier 23 an. Das Scharnier 23 ist durch eine Materialverjüngung realisiert. An das Scharnier 23 wiederum schließt sich die ebenfalls aus Gummi bestehende Trägerschürze 38 an. Die Trägerschürze 38, das Scharnier 23 und das Ende des Stützrings 19 bestehen hierbei aus demselben Material. Im Ausführungsbeispiel ist dies Gummi. Auf der Trägerschürze 38 ist der biegesteife Lippenstreifen 39 fixiert. Der biegesteife Lippenstreifen 39 besteht aus geeignetem steifem Material, beispielsweise Stahl oder Kunststoff. Der biegesteife Lippenstreifen 39 kann - wie im Ausführungsbeispiel - mit der Trägerschürze 38 verklebt sein. Es ist auch möglich, die Trägerschürze 38 und den Lippenstreifen 39 mit Hilfe eines zweikomponenten Materials integriert auszuführen. Auch ist es möglich, Trägerschürze 38 und Lippenstreifen 39 miteinander zu verklipsen oder zu verschrauben oder zu verschweißen.

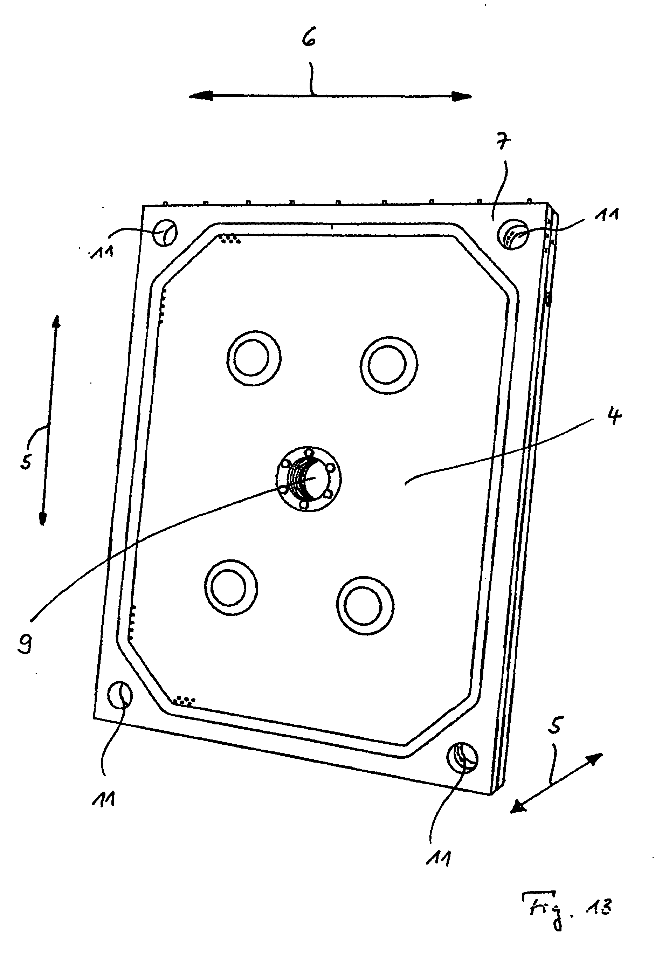

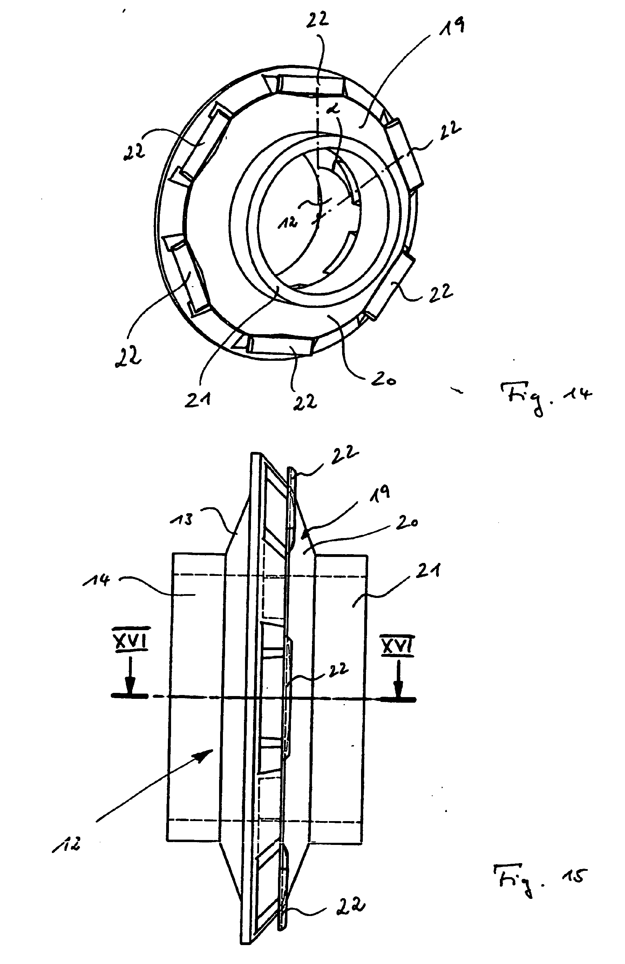

Fig. 13 zeigt beispielhaft eine Filterplatte mit mittig zentral angeordnetem Trübeeinlauf 9. Fig. 14 zeigt eine aus einem Stützring 19 und einem Verteilerring 12 bestehende Ringkombination, welche dazu geeignet ist, in ein Plattenpaar mit zentral angeordnetem Trübeeinlauf 9 gemäß dem in Fig. 13 gezeigten Ausführungsbeispiel montiert zu werden.

Die perspektivische Darstellung der Fig. 14 zeigt im Vordergrund den in den zentralen Trübeeinlauf 9 einer Kammerfilterplatte 3 gemäß Fig. 13 einzusetzenden Stützring 19. Im Hintergrund erkennbar ist ein dem Stützring 19 zugeordneter Verteilerring 12. Der Verteilerring 12 ist ebenfalls ausgestaltet, um in den zentralen Trübeeinlauf 9 einer als Membranfilterplatte 2 ausgestalteten Filterplatte gemäß Fig. 13 eingesetzt zu werden. Der in den Fig. 14 bis Fig. 18 dargestellte Verteilerring weist insgesamt sechs sternförmig angeordnete Einlaufkanäle 17 auf. Dementsprechend sind an den sechs Einlaufkanälen 17 sechs Schutzlippen 22 am Stützring 19 ausgebildet. Der Innenwinkel α zwischen zwei Einlaufkanälen 17 beträgt bei der Ausführungsform mit sternförmig angeordneten Einlaufkanälen 17 30° oder mehr.

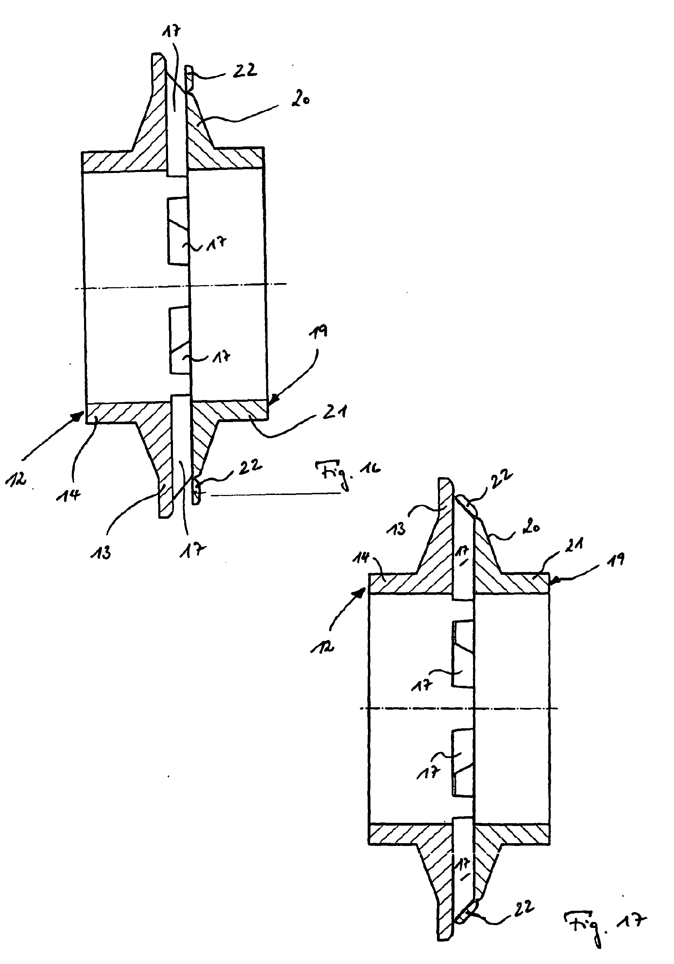

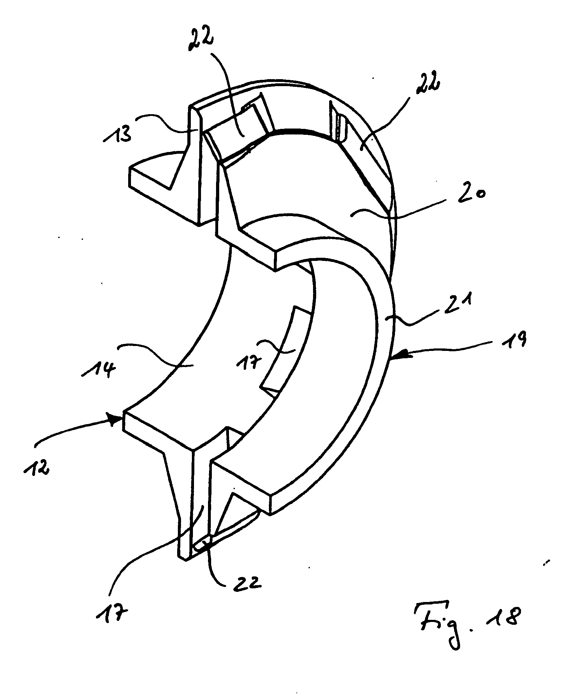

Während die Fig. 14 bis Fig. 16 den Verteilerring 12 und den zugeordneten Stützring 19 in der Filtrierstellung mit geöffneten Schutzlippen 22 zeigen, zeigt Fig. 17 die Schnittdarstellung der Fig. 16 in der Funktionsstellung beim Auswerfen des Filterkuchens. Hierbei sind alle sechs Einlaufkanäle 17 von den ihnen jeweils zugeordneten Schutzlippen 22 verschlossen. Die Lippenkontur ist hierbei der Rundung des Flansches 13 des Verteilerring, 12 so angepasst, dass die Schutzlippe 22 sich besonders gut an den Flansch 13 anschmiegt und so den Einlaufkanal 17 besonders wirkungsvoll verschließt. Dies ist auch noch einmal aus der geschnittenen Detaildarstellung der Fig. 18 gut erkennbar. Aufgrund der Form der Schutzlippen 22 liegt die in Fig. 17 nicht dargestellte Membranmatte 26 bei geschlossenen Schutzlippen 22 an der gesamten Kontur ohne Überdehnung an.

Die anhand der Zeichnungsfiguren beschriebenen Ausführungsbeispiele stellen die Erfindung keineswegs abschließend dar. Es handelt sich nur um beispielhafte Ausführungen. Andere Ausführungsformen sind also ebenfalls denkbar. Insbesondere ist es auch denkbar, für eine Filterplatte gemäß Fig. 13 mit zentralem Trübeeinlauf 9 ein einstückiges Bauteil 35 zum Einbau in den Trübeeinlauf 9 vorzusehen. Die Erfindung eignet sich deshalb auch zum Nachrüsten in bereits vorhandene Filterplattensysteme.

### Bezugszeichenliste

- 1: Filterplattenpaket
- 2: Membranfilterplatte
- 3: Kammerfilterplatte
- 4: Filterfläche
- 5: vertikale Richtung
- 6: Querrichtung
- 7: Dichtrand
- 8: Plattenaufbaurichtung
- 9: Trübeeinlauf
- 10: Einfassung
- 11: Filtratbohrung
- 12: Verteilerring
- 13: Flansch
- 14: Rohrabschnitt
- 15: Flanschkragen
- 16: radiale Richtung
- 17: Einlaufkanal
- 18: Schräge
- 19: Stützring
- 20: Flansch
- 21: Rohrabschnitt
- 22: Schutzlippe
- 23: Scharnier
- 24: Verbindungselement
- 25: Verbindungselement
- 26: Membranmatte
- 27: Filtertuch
- 28: Befestigungselement
- 29: Filterkammer
- 30: Filtrierweg
- 31: Filterkuchen

- 32: Ausdehnungsrichtung
- 33: Schwenkradius
- 35: Bauteil
- 36: Stützflansch
- 37: Verteilerflansch
- 38: Trägerschürze
- 39: biegesteifer Lippenstreifen
- α: Innenwinkel

## Patentansprüche

1. Filterplattenpaket (1) mit wenigstens einer Kammerfilterplatte (3)
• mit einem im Querschnitt gesehen im Wesentlichen kreisförmigen Trübeeinlauf (9) und
• mit einem am Trübeeinlauf (9) angeordneten Verteilerring (12) mit mindestens einem Einlaufkanal (17) für Trübe
und mit einer der jeweiligen Kammerfilterplatte (3) gegenüberliegenden Membranfilterplatte (2)
• mit einem im Querschnitt gesehen im Wesentlichen kreisförmigen Trübeeinlauf (9),
• mit einem am Trübeeinlauf (9) angeordneten, dem Verteilerring (12) der jeweiligen Kammerfilterplatte (3) gegenüberliegenden Stützring (19),
• mit einer Filterfläche (4), einer darauf angeordneten Membranmatte (26)
und einem über die Membranmatte (26) gespannten Filtertuch (27), wobei die Kammerfilterplatte (3) und die Membranfilterplatte (2) eine Filterkammer (29) umschließen, und wobei die Membranmatte (26) auf der der Kammerfilterplatte (3) zugewandten Seite der Filterfläche (4) und das Filtertuch (27) auf der der Kammerfilterplatte (3) zugewandten Seite der Membranmatte (26) angeordnet ist,
**gekennzeichnet durch**
mindestens eine am Stützring (19) schwenkbar gelagerte Schutzlippe (22), die räumlich im Wesentlichen zwischen dem Filtertuch (27) und dem Verteilerring (12) angeordnet ist, und die in ihrer Schließstellung am Verteilerring (12) anliegt und den Einlaufkanal (17) wenigstens teilweise abdeckt.

2. Filterplattenpaket (1) nach Anspruch 1,
**dadurch gekennzeichnet,**
**dass** die Schutzlippe (22) das Ende des Einlaufkanals (17) abdeckt

3. Filterplattenpaket (1) nach Anspruch 1 oder 2,
**dadurch gekennzeichnet,**
**dass** der Verteilerring (12) und der Stützring (19) zu einem einstückigen Bauteil (35) miteinander verbunden sind.

4. Filterplattenpaket (1) nach Anspruch 3,
**gekennzeichnet durch**
geschlossene, zwischen Stützring (19) und Verteilerring (12) angeordnete Einlaufkanäle (17).

5. Filterplattenpaket (1) nach Anspruch 1 oder 2,
**dadurch gekennzeichnet,**
**dass** sich der Stützring (19) am Verteilerring (12) bei geschlossener Filterkammer (29) abstützt.

6. Filterplattenpaket (1) nach einem der Ansprüche 1 bis 5,
**dadurch gekennzeichnet, dass** die jeweilige Kammerfilterplatte (3) eine Filterfläche (4), einen die Filterfläche (4) umrahmenden Dichtrand (7) und einen im Bereich der Filterfläche (4) angeordneten Trübeeinlauf (9) aufweist.

7. Filterplattenpaket (1) nach Anspruch 6,
**dadurch gekennzeichnet, dass** die jeweilige Kammerfilterplatte (3) einen in der Mitte der Filterfläche (4) angeordneten Trübeeinlauf (9) aufweist.

8. Filterplattenpaket (1) nach Anspruch 6 oder 7,
**gekennzeichnet durch**
mehrere sternförmig angeordnete Einlaufkanäle (17).

9. Filterplattenpaket (1) nach Anspruch 8,
**gekennzeichnet durch**
einen Winkel größer oder gleich 30° zwischen den Einlaufkanälen (17).

10. Filterplattenpaket (1) nach Anspruch 8 oder 9,
**gekennzeichnet durch**
mehrere, jeweils am Ende eines Einlaufkanals (17) angeordnete Schutzlippen (22).

11. Filterplattenpaket (1) nach einem der vorhergehenden Ansprüche,
**dadurch gekennzeichnet,**
**dass** der Stützring (19) und die Schutzlippe (22) aus demselben Werkstoff bestehen.

12. Filterplattenpaket (1) nach einem der vorhergehenden Ansprüche,
**dadurch gekennzeichnet,**
**dass** die Schutzlippe (22) über ein Filmscharnier am Stützring (19) gelagert ist.

13. Filterplattenpaket (1) nach Anspruch 12,
**dadurch gekennzeichnet,**
**dass** das Filmscharnier aus einem schwenkbaren Scharnierteil und einer Trägerschürze (38) besteht und dass auf der Trägerschürze (38) ein biegesteifer Lippenstreifen (39) fixiert ist.

14. Filterplattenpaket (1) nach Anspruch 13,
**gekennzeichnet durch**
einen von der Trägerschürze (38) entfernbaren und **dadurch** auswechselbaren biegesteifen Lippenstreifen (39).

15. Filterplattenpaket (1) nach einem der Ansprüche 1 bis 14,
**gekennzeichnet durch**
eine am Stützring (19) lösbar fixierte und damit austauschbare Schutzlippe (22).

## Claims

1. A filter-plate packet (1) having at least one compartment-type filter plate (3)
• with a sludge-liquor inlet (9) with a substantially circular cross-section, and
• with a distributing ring (12), arranged on the sludge-liquor inlet (9), with at
least one inlet channel (17) for sludge liquor,
and having a diaphragm filter plate (2) situated opposite the respective compartment-type filter plate (3),
• with a sludge-liquor inlet (9) with a substantially circular cross-section,
• with a supporting ring (19) arranged on the sludge-liquor inlet (9) and situated opposite the distributing ring (12) of the respective compartment-type filter plate (3),
• with a filtering surface (4), a diaphragm mat (26) arranged thereon, and a
filter cloth (27) stretched over the diaphragm mat (26),
the compartment-type filter plate (3) and the diaphragm filter plate (2) enclosing a filter compartment (29) and the diaphragm mat (26) being arranged on the side of the filtering surface (4) facing towards the compartment-type filter plate (3), and the filter cloth (27) being arranged on the side of the diaphragm mat (26) facing towards the compartment-type filter plate (3),
**characterized by** at least one protective lip (22) pivotably supported on the supporting ring (19), which is spatially arranged substantially between the filter cloth (27) and the distributing ring (12) and which, in its closing position, bears against the distributing ring (12), covering at least part of the inlet channel (17).

2. The filter-plate packet (1) of claim 1,
**characterized in that** the protective lip (22) covers the end of the inlet channel (17).

3. The filter-plate packet (1) of claim 1 or 2,
**characterized in that** the distributing ring (12) and the supporting ring (19) are integrally connected with each other in one component (35).

4. The filter-plate packet (1) of claim 3,
**characterized by** closed inlet channels (17) arranged between the supporting ring (19) and the distributing ring (12).

5. The filter-plate packet (1) of claim 1 or 2,
**characterized in that** the supporting ring (19) rests on the distributing ring (12) when the filter compartment (29) is closed.

6. The filter-plate packet (1) of any of claims 1 to 5,
**characterized in that** the respective compartment-type filter plate (3) includes a filtering surface (4), a sealing edge (7) surrounding the filtering surface (4), and a sludge-liquor inlet (9) arranged in the area of the filtering surface (4).

7. The filter-plate packet (1) of claim 6,
**characterized in that** the respective compartment-type filter plate (3) includes a sludge-liquor inlet (9) arranged in the center of the filtering surface (4).

8. The filter-plate packet (1) of claim 6 or 7,
**characterized by** several inlet channels (17) arranged radially.

9. The filter-plate packet (1) of claim 8,
**characterized by** an angle larger than, or equal to, 30° between the inlet channels (17).

10. The filter-plate packet (1) of claim 8 or 9,
**characterized by** several protective lips (22), each of them arranged at the end of an inlet channel (17).

11. The filter-plate packet (1) of any of the preceding claims,
**characterized in that** the supporting ring (19) and the protective lip (22) are made of the same material.

12. The filter-plate packet (1) of any of the preceding claims,
**characterized in that** the protective lip (22) is carried on the supporting ring (19) by means of a film hinge.

13. The filter-plate packet (1) of claim 12,
**characterized in that** the film hinge consists of a pivotable hinge part and a carrier skirt (38) and that a deflection-resistant lip strip (39) is fixed on the carrier skirt (38).

14. The filter-plate packet (1) of claim 13,
**characterized by** a deflection-resistant lip strip (39) which can be removed from the carrier skirt (38) and can thus be exchanged.

15. The filter-plate packet (1) of any of claims 1 to 14,
**characterized by** a protective lip (22) which is detachably fixed on the supporting ring (19) and can thus be exchanged.

## Revendications

1. Paquet de plaques filtrantes (1) ayant au moins une plaque filtrante à chambres (3)
• avec une entrée du liquide surnageant (9) à section essentiellement circulaire et
• avec une bague de distribution (12), disposée à l'entrée du liquide surnageant (9), avec au moins un canal d'entrée (17) pour le liquide surnageant, et ayant une plaque filtrante à diaphragme (2) située en face de la plaque filtrante à chambres (3) respective,
• avec une entrée du liquide surnageant (9) à section essentiellement circulaire,
• avec une bague d'appui (19) disposée à l'entrée du liquide surnageant (9) et située en face de la bague de distribution (12) de la plaque filtrante à chambres (3) respective,
• avec une surface de filtrage (4), une nappe diaphragme (26) disposée là-dessus et une toile de filtrage (27) tendue sur la nappe diaphragme (26),
la plaque filtrante à chambres (3) et la plaque filtrante à diaphragme (2) enfermant une chambre de filtrage (29) et la nappe diaphragme (26) étant disposée au côté de la surface de filtrage (4) en regard de la plaque filtrante à chambres (3) et la toile de filtrage (27) étant disposée au côté de la nappe diaphragme (26) en regard de la plaque filtrante à chambres (3),
**caractérisé par**
au moins une lèvre de protection (22) logée de manière pivotable à la bague d'appui (19), qui est disposée dans l'espace essentiellement entre la toile de filtrage (27) et la bague de distribution (12) et qui, dans sa position de fermeture, prend appui à la bague de distribution (12), couvrant au moins une partie du canal d'entrée (17).

2. Paquet de plaques filtrantes (1) selon la revendication 1,
**caractérisé en ce**
**que** la lèvre de protection (22) couvre le bout du canal d'entrée (17).

3. Paquet de plaques filtrantes (1) selon la revendication 1 ou 2,
**caractérisé en ce**
**que** la bague de distribution (12) et la bague d'appui (19) sont solidarisées l'une avec l'autre dans un seul composant (35).

4. Paquet de plaques filtrantes (1) selon la revendication 3,
**caractérisé par**
des canaux d'entrée (17) fermés disposés entre la bague d'appui (19) et la bague de distribution (12).

5. Paquet de plaques filtrantes (1) selon la revendication 1 ou 2,
**caractérisé en ce**
**que** la bague d'appui (19) s'appuye sur la bague de distribution (12) lorsque la chambre de filtrage (29) est fermée.

6. Paquet de plaques filtrantes (1) selon l'une quelconque des revendications 1 à 5,
**caractérisé en ce que** la plaque filtrante à chambres (3) respective comprend une surface de filtrage (4), une arête d'étanchéité (7) encadrant la surface de filtrage (4) et une entrée du liquide surnageant (9) disposée dans la zone de la surface de filtrage (4).

7. Paquet de plaques filtrantes (1) selon la revendication 6,
**caractérisé en ce que** la plaque filtrante à chambres (3) respective comprend une entrée du liquide surnageant (9) disposée dans le centre de la surface de filtrage (4).

8. Paquet de plaques filtrantes (1) selon la revendication 6 ou 7,
**caractérisé par**
plusieurs canaux d'entrée (17) arrangés en étoile.

9. Paquet de plaques filtrantes (1) selon la revendication 8,
**caractérisé par**
un angle plus large de ou égal à, 30° entre les canaux d'entrée (17).

10. Paquet de plaques filtrantes (1) selon la revendication 8 ou 9,
**caractérisé par** plusieurs lèvres de protection (22), chacune desquelles étant disposée au bout d'un canal d'entrée (17).

11. Paquet de plaques filtrantes (1) selon l'une quelconque des revendications précédentes,
**caractérisé en ce que** la bague d'appui (19) et la lèvre de protection (22) sont faites du même matériau.

12. Paquet de plaques filtrantes (1) selon l'une quelconque des revendications précédentes,
**caractérisé en ce que** la lèvre de protection (22) est logé à la bague d'appui (19) au moyen d'une charnière à film.

13. Paquet de plaques filtrantes (1) selon la revendication 12,
**caractérisé en ce que** la charnière à film se compose d'une pièce de charnière pivotable et d'un tablier de support (38) et qu'une bande de lèvre (39) résistante à la flexion est fixée sur le tablier de support (38).

14. Paquet de plaques filtrantes (1) selon la revendication 13,
**caractérisé par**
une bande de lèvre (39) résistante à la flexion qui peut être enlevée du tablier de support (38) et peut ainsi être échangée.

15. Paquet de plaques filtrantes (1) selon l'une quelconque des revendications 1 à 14,
**caractérisé par**
une lèvre de protection (22) qui est fixée de manière amovible à la bague d'appui (19) et peut ainsi être échangée.
